(19) Europäisches Patentamt
European Patent Office
Office européen des brevets

(11) **EP 4 245 428 A1**

(12) **EUROPEAN PATENT APPLICATION**
published in accordance with Art. 153(4) EPC

(43) Date of publication:
**20.09.2023 Bulletin 2023/38**

(21) Application number: **21891497.6**

(22) Date of filing: **21.09.2021**

(51) International Patent Classification (IPC):
**B05D 7/24** (2006.01)     **C09D 4/00** (2006.01)
**C09D 5/34** (2006.01)     **C09D 167/06** (2006.01)
**C09D 7/43** (2018.01)     **C09D 7/61** (2018.01)
**C09D 7/63** (2018.01)

(52) Cooperative Patent Classification (CPC):
**B05D 7/24; C09D 4/00; C09D 5/34; C09D 7/43;
C09D 7/61; C09D 7/63; C09D 167/06**

(86) International application number:
**PCT/JP2021/034597**

(87) International publication number:
**WO 2022/102249 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.11.2020 JP 2020190310**

(71) Applicant: **Nippon Paint Industrial Coatings Co.,
Ltd.
Tokyo 140-8675 (JP)**

(72) Inventors:
• **MARUYAMA, Kota**
**Osaka-shi, Osaka 531-8511 (JP)**
• **NAKAMURA, Isao**
**Osaka-shi, Osaka 531-8511 (JP)**
• **OHNISHI, Katsuaki**
**Osaka-shi, Osaka 531-8511 (JP)**

(74) Representative: **Mewburn Ellis LLP
Aurora Building
Counterslip
Bristol BS1 6BX (GB)**

(54) **PUTTY COATING COMPOSITION**

(57)     An object of the present invention is to provide a putty coating composition that can be applied with an airless spray and has good application workability, and further to provide a putty coating composition that can form a putty coating film having good sanding resistance. A putty coating composition comprising a base agent (I) and a curing agent (II), in which the base agent (I) comprises an unsaturated polyester resin (A), an unsaturated monomer (B), a filler (C), a viscosity modifier (D), and an abrasive modifier (E), the curing agent (II) comprises an organic peroxide (F) and a plasticizer (G), a viscosity of the base agent (I) at 23°C is in a range of 0.5 to 130 Pa·s, a viscosity of the curing agent (II) at 23°C is in a range of 5 to 20 mPa·s, and the viscosity modifier (D) comprises an inorganic laminar compound.

EP 4 245 428 A1

**Description**

TECHNICAL FIELD

The present invention relates to a putty coating composition.

BACKGROUND ART

In order to impart aesthetics and to prevent corrosion and the like, a surface of a railway vehicle outside plate is usually first primer-coated, then putty-coated (puttied) to smooth the surface, and further finished by surfacer-coating and top-coating. Meanwhile, a spray application method is usually used in primer coating, surfacer-coating, and top-coating, but in putty coating, a metal spatula is used for puttying because it is necessary to attain a film thickness of about 1 to 10 mm.

Putty coating in the coating of a railway vehicle outside plate is often conducted manually with a spatula for a large area of the vehicle outside plate, and requires a lot of work time and skill. Such a railway vehicle has a very large outside plate surface area as compared to a road vehicle. Furthermore, in a railway vehicle, manual puttying work is usually required about 3 to 6 times in order to correct and smooth distortion (undulation) of the vehicle outside plate. However, in the puttying method using a spatula as described above, not only much operation time is required, but also operators are needed to have considerable skill, and there is a problem that it is difficult to form a putty coating film and efficiency is poor.

In order to solve this problem, a method that involves spray applying a putty is under development. JP-A-7-328523 (Patent Literature 1) discloses a method in which a base agent component preheated to 30 to 50°C and a mixture of a curing agent component and compressed air are merged and mixed at a tip of a spray gun. In this method, since mixing with air is conducted at the tip of the spray gun, there are technical problems such as insufficient mixing of the base agent and the curing agent and generation of odor. In addition, since three hoses are attached to the spray gun, the mass of the gun is large, so that the load on an operator may increase. Furthermore, there is also a technical problem that a device for preheating the base agent is required.

JP-A-10-80666 (Patent Literature 2) describes a method for forming a putty coating film on a railway vehicle outside plate characterized in that spray application is executed by separately introducing a base agent component forcibly fed at a pressure suitable for the spray application, a curing agent component forcibly fed by compressed air and separate compressed air into a spray gun, respectively, preliminarily mixing the curing agent component forcibly fed by compressed air with a part of the separate compressed air by a nozzle disposed in the rear of the inside of the spray gun, making a preliminary mixture and the remainder of the separate compressed air confluent in the front of the inside of the spray gun and simultaneously making both collide with an impact material, and discharging a mixture of the uniformly mixed curing agent component and the separate compressed air by the impact wave effect thereof while both are made confluent and mixed with the base agent component at the tip end part of the spray gun. Thus, it is described that a putty coating film having a required thickness can be formed by a simple operation without using a static mixer.

CITATIONS LIST

PATENT LITERATURE

Patent Literature 1: JP-A-7-328523

Patent Literature 2: JP-A-10-80666

SUMMARY OF INVENTION

TECHNICAL PROBLEMS

As described in the above patent documents, a method for forming a putty coating film by spray application has been studied so far. On the other hand, an object of the present invention is to provide a putty coating composition that can be applied with an airless spray that can more easily applies, and has good application workability and the like. Furthermore, putty coating films may be required to have sanding resistance. An object of the present invention is to provide a putty coating composition capable of forming a putty coating film having good sanding resistance.

SOLUTIONS TO PROBLEMS

In order to solve the above-described problems, the present invention provides the following embodiments.

[1] A putty coating composition comprising a base agent (I) and a curing agent (II),

wherein the base agent (I) comprises an unsaturated polyester resin (A), an unsaturated monomer (B), a filler (C), a viscosity modifier (D), and an abrasive modifier (E),
wherein the curing agent (II) comprises an organic peroxide (F) and a plasticizer (G),
wherein a viscosity of the base agent (I) at 23°C is in a range of 0.5 to 130 Pa·s,
wherein a viscosity of the curing agent (II) at 23°C is in a range of 5 to 20 mPa s, and
wherein the viscosity modifier (D) comprises an inorganic laminar compound.

[2] The putty coating composition according to [1], wherein a mass ratio of the organic peroxide (F) to a total amount of the unsaturated polyester resin (A) and the unsaturated monomer (B) contained in the putty coating composition is in a range of ((A)+(B)):(F) = 100:2 to 100:35.
[3] The putty coating composition according to [1] or [2], wherein the putty coating composition is a coating composition for airless spray application by a static mixing system.
[4] The putty coating composition according to any one of [1] to [3], wherein a mass ratio of the unsaturated polyester resin (A) and the unsaturated monomer (B) contained in the putty coating composition is in a range of (A):(B) = 100:3 to 100:260.
[5] The putty coating composition according to any one of [1] to [4], wherein a volume ratio of the base agent (I) and the curing agent (II) in the putty coating composition is in a range of base agent (I):curing agent (II) = 100:2 to 100:25.
[6] The putty coating composition according to any one of [1] to [5], wherein the inorganic laminar compound is at least one selected from the group consisting of organic bentonite and hectorite.
[7] The putty coating composition according to any one of [1] to [6], wherein the abrasive modifier (E) is a carbonate salt of one or more divalent metal elements.
[8] The putty coating composition according to any one of [1] to [7], wherein a Ti value in a mixture of the base agent (I) and the curing agent (II) is in a range of 3 to 6.
[9] A method for forming a putty coating film using a putty coating composition comprising a base agent (I) and a curing agent (II),

the method comprising an application step of mixing the base agent (I) and the curing agent (II) in a static mixer unit and applying the mixture with an airless spray,
wherein the base agent (I) comprises an unsaturated polyester resin (A), an unsaturated monomer (B), a filler (C), a viscosity modifier (D), and an abrasive modifier (E),
wherein the curing agent (II) comprises an organic peroxide (F) and a plasticizer (G),
wherein a viscosity of the base agent (I) at 23°C is in a range of 0.5 to 130 Pa·s,
wherein a viscosity of the curing agent (II) at 23°C is in a range of 5 to 20 mPa s, and
wherein the viscosity modifier (D) comprises an inorganic laminar compound.

ADVANTAGEOUS EFFECTS OF INVENTION

The putty coating composition can be suitably applied with an airless spray, and is also good in application workability. Furthermore, by using the putty coating composition, it is possible to form a putty coating film having good sanding resistance.

DESCRIPTION OF EMBODIMENT

The putty coating composition contains a base agent (I) and a curing agent (II). The base agent (I) contains an unsaturated polyester resin (A), an unsaturated monomer (B), a filler (C), a viscosity modifier (D), and an abrasive modifier (E), and the curing agent (II) contains an organic peroxide (F) and a plasticizer (G). In the following, respective components are described.

Unsaturated polyester resin (A)

As the unsaturated polyester resin (A) contained in the base agent (I), those commonly used in putty coating compositions can be used. Such an unsaturated polyester resin can be obtained, for example, through a condensation reaction between an unsaturated polybasic acid and a polyhydric alcohol. In the synthesis reaction of the unsaturated polyester resin, it is preferable to perform condensation in the presence of an air-dryable component.

Examples of the unsaturated polybasic acid include maleic acid, maleic anhydride, fumaric acid, itaconic acid, and citraconic acid. Examples of the polyhydric alcohol include ethylene glycol, propylene glycol, diethylene glycol, hydrogenated bisphenol A, and an ethylene oxide derivative of bisphenol A, and a propylene oxide derivative of bisphenol A. The air-dryable component preferably has an iodine value of 40 or more. Examples of such a component include allyl compounds such as allyl glycidyl ether, allyl glycol, glycerin monoallyl ether, glycerin diallyl ether, and trimethylolpropane diallyl ether, and animal aor vegetable oils such as soybean oil, linseed oil, dehydrated castor oil, tung oil, fish oil, transesterified oils thereof, and fatty acids. Use of the air-dryable component in the synthesis of the unsaturated polyester resin (A) offers an advantage that the abrasive of a resulting coating film can be improved.

The unsaturated polyester resin (A) can be synthesized by a commonly known method. Examples of a specific synthesis method include a method in which an unsaturated polybasic acid, a polyhydric alcohol, and an air-dryable component are condensed at 150 to 250°C, and a method in which all or part of an unsaturated polybasic acid is reacted with a polyhydric alcohol at 150 to 220°C and then the remaining unsaturated polybasic acid and an air-dryable component are added and reacted at 120 to 220°C. In the synthesis of the unsaturated polyester resin (A), the amounts of the unsaturated polybasic acid, the polyhydric alcohol, and the air-dryable component are preferably 30 to 60 parts by mass of the unsaturated polybasic acid, 10 to 40 parts by mass of the polyhydric alcohol, and 3 to 30 parts by mass of the air-dryable component where the total mass of the unsaturated polybasic acid, the polyhydric alcohol, and the air-dryable component is 100 parts by mass.

From the viewpoint of improving the crack resistance of a resulting coating film, 10 to 70 mol% of the unsaturated polybasic acid preferably is replaced by a saturated polybasic acid. The above value is more preferably 20 to 60 mol%. Examples of the saturated polybasic acid include adipic acid, azelaic acid, sebacic acid, phthalic anhydride, phthalic acid, isophthalic acid, and tetrahydrophthalic acid. Among these saturated polybasic acids, aliphatic saturated polybasic acids are more preferable.

The unsaturated polyester resin also can be produced with addition of an alkyl glycidyl ester, dicyclopentadiene, and the like in addition to the unsaturated polybasic acid, the polyhydric alcohol, and the air-dryable component. By synthesizing the unsaturated polyester resin using these components, it is possible to impart better durability and adherability to the resin.

The unsaturated polyester resin (A) preferably exhibits a pot life in a range of 5 to 30 minutes. A pot life being in the above range offers an advantage that good workability can be obtained.

In the present disclosure, the pot life of the unsaturated polyester resin (A) refers to a time from blending of an organic peroxide to a gelation of the unsaturated polyester resin when the unsaturated polyester resin is cured using the organic peroxide. The pot life is a value measured by the method described in EXAMPLES described later.

The unsaturated polyester resin (A) preferably has a number average molecular weight in a range of 1,000 to 4,000. The acid value of the unsaturated polyester resin (A) is preferably 70 mg KOH/g or less. The number average molecular weight and the acid value satisfying the above ranges offers an advantage that good workability can be obtained.

In the present disclosure, the number average molecular weight is a polystyrene-equivalent value determined by gel permeation chromatography (GPC). In the present disclosure, the acid value of a resin represents a solid acid value, and is a value measured by the method described in JIS K 0070.

Unsaturated monomer (B)

The unsaturated monomer (B) contained in the base agent (I) is a component that functions as a reactive diluent in the putty coating composition. As the unsaturated monomer (B), a monomer having an ethylenically unsaturated group can be used. Examples of the unsaturated monomer (B) include monomers containing an aromatic group and an ethylenically unsaturated group such as styrene, α-methylstyrene, chlorostyrene, vinyltoluene, t-butylstyrene, and divinylbenzene; (meth)acrylate ester monomers of monohydric or polyhydric alcohols such as methyl (meth)acrylate, ethyl (meth)acrylate, propyl (meth)acrylate, butyl (meth)acrylate, 2-ethylhexyl (meth)acrylate, isobornyl (meth)acrylate, norbornyl (meth)acrylate, adamantyl (meth)acrylate, trimethylolpropane tri(meth)acrylate, tetramethylolmethane tetra(meth)acrylate, and dipentaerythritol hexa(meth)acrylate; monomers containing a hydroxyl group and an ethylenically unsaturated group such as 2-hydroxyethyl (meth)acrylate; monomers containing a glycidyl group and an ethylenically unsaturated group such as glycidyl (meth)acrylate; and other unsaturated monomers such as vinyl acetate, acrylonitrile, and diallyl phthalate.

In the present description, "(meth)acrylic acid" means acrylic acid and methacrylic acid.

Examples of the unsaturated monomer (B) include monomers containing an aromatic group and an ethylenically unsaturated group such as styrene, and it is preferable to use styrene, α-methylstyrene, chlorostyrene, vinyltoluene, t-butylstyrene, divinylbenzene, ethyl (meth)acrylate, glycidyl (meth)acrylate, 2-ethylhexyl (meth)acrylate, vinyl acetate, acrylonitrile, diallyl phthalate, or the like, and it is more preferable to use styrene, α-methylstyrene, chlorostyrene, vinyltoluene, or t-butylstyrene. Use of such an unsaturated monomer offers an advantage that the reactivity in the putty coating composition is superior and the coating film properties of a resulting putty coating film can be maintained in a favorable state.

The mass ratio of the unsaturated polyester resin (A) and the unsaturated monomer (B) contained in the putty coating composition is preferably in a range of (A):(B) = 100:3 to 100:260, more preferably in a range of 100:5 to 100:150, and still more preferably in a range of 100:20 to 100:80. The mass ratio means a solid mass ratio (component mass ratio). A mass ratio of the unsaturated polyester resin (A) and the unsaturated monomer (B) being in the above range offers an advantage that the viscosity of the base agent (I) can be designed to fall within a suitable range and the reactivity in the putty coating composition and the coating film properties of a resulting putty coating film can be maintained in a favorable state.

Filler (C)

As the filler (C) contained in the base agent (I), a filler usually used in the field of putty coating compositions can be used without particular limitation. Examples of the filler (C) include extender pigments such as calcium carbonate, barium sulfate, clay, kaolin, mica, and silica; coloring pigments such as titanium oxide, red iron oxide, carbon black, iron oxide, and cyanine blue; glass fibers, glass balloons, and plastic balloons. In the present description, the abrasive modifier (E) described below is not included in the filler (C).

As the filler (C), for example, calcium carbonate, barium sulfate, clay, kaolin, mica, silica, and titanium oxide can be more suitably used, for example, in airless spray application by a static mixing system. Use of such a filler offers an advantage that good performance as a putty coating film to be formed can be secured.

The amount of the filler (C) contained in the base agent (I) is preferably in a range of 25 to 400 parts by mass, more preferably in a range of 50 to 400 parts by mass, and still more preferably in a range of 70 to 250 parts by mass, with respect to 100 parts by mass of the total solid content of the unsaturated polyester resin (A) and the unsaturated monomer (B) contained in the base agent. An amount of the filler (C) being in the above range offers an advantage that good performance as a putty coating film to be formed can be secured.

Viscosity modifier (D)

The base agent (I) contains a viscosity modifier (D) in addition to the components described above. In the putty coating composition, an inorganic laminar compound is contained as the viscosity modifier (D). The inorganic laminar compound has a property that when the composition receives a shear force, the layered structure of the inorganic laminar compound has separation or the like and a rheological behavior is developed.

Examples of the inorganic laminar compound include smectite clay minerals such as montmorillonite, beidellite, nontronite, saponite, hectorite, sauconite, and stevensite; and swellable mica clay minerals such as tetrasilic fluorine mica and fluorine teniolite.

Preferable examples of the inorganic laminar compound include organic bentonite. Organic bentonite is a component having a structure in which an organic cation such as an organic ammonium salt is intercalated between layers of bentonite having crystal layers. Here, the bentonite is an inorganic component having a layered structure including montmorillonite as a main component and further including at least one of silicic acid, a silicate salt, a carbonate salt, a sulfate salt, a sulfide, and the like as an auxiliary component. Organic bentonite generally exhibits a property that it is difficult to swell in an aqueous solvent, but swells and exhibits a thickening property in an organic solvent.

Examples of the organic ammonium salt intercalated between layers of bentonite include a quaternary ammonium having an alkyl group having alkyl group having 1 to 30 carbon atoms, and more preferably a quaternary ammonium having an alkyl group having 1 to 20 carbon atoms.

Examples of such organic bentonite include BENTONE series and the like (manufactured by Elementis plc.), BEN-GEL series, S-BEN series, ORGANITE series and the like (manufactured by HOJUN Co., Ltd.), ORBEN series (manufactured by Shiraishi Kogyo Kaisha, Ltd.), and CLAYTONE series, TIXOGEL series, and the like (manufactured by BYK).

Other examples of the inorganic laminar compound include LAPONITE-XLG (synthetic hectorite-like substance manufactured by BYK), LAPONITE-RD (synthetic hectorite-like substance manufactured by BYK), LAPONITE-EP (synthetic hectorite-like substance manufactured by BYK), LAPONITE-RDS (synthetic hectorite-like substance manufactured by BYK), THERMABIS (synthetic hectorite-like substance manufactured by Henkel Corp.), SUMECTON-SA-1 (saponite-like substance manufactured by Kunimine Industries Co., Ltd.), KUNIPIA F (natural montmorillonite, manufactured by Kunimine Industries Co., Ltd.), VEEGUM (natural hectorite manufactured by R.T. Vanderbilt Co., Inc.), DIMONITE (synthetic swellable mica manufactured by Topy Industries, Ltd.), SOMASIF (synthetic swellable mica manufactured by CO-OP Chemical Co., Ltd.), SWN (synthetic smectite manufactured by CO-OP Chemical Co., Ltd.), and SWF (synthetic smectite manufactured by CO-OP Chemical Co., Ltd.).

It is considered as follows: a structural viscosity suitable for airless spray application is provided to the putty coating composition containing the base agent (I) containing the unsaturated polyester resin (A), the unsaturated monomer (B), the filler (C), and the like and the curing agent (II) due to the fact that the base agent (I) in the putty coating composition contains the viscosity modifier (D) containing an inorganic laminar compound,. This offers an advantage that good application workability can be obtained in the application of the putty coating composition and good sanding workability and the like can be obtained with a putty coating film after application.

The putty coating composition prepared using the viscosity modifier (D) containing the inorganic laminar compound can be more suitably used particularly in airless spray application by a static mixing system, and the like.

The inorganic laminar compound in the present invention is preferably a layered material having a stacked structure in which a large number of inorganic crystal layers are stacked. Since the inorganic laminar compound having such a layered structure swells in the coating composition and forms a card house structure in the coating composition, it imparts a moderate viscosity to the coating composition and provides superior coating film strength.

The amount of the viscosity modifier (D) with respect to the total amount of the unsaturated polyester resin (A) and the unsaturated monomer (B) contained in the putty coating composition is preferably in a range of 0.1 to 25 parts by mass, more preferably in a range of 0.3 to 10 parts by mass, and still more preferably in a range of 0.3 to 1.5 parts by mass, with respect to 100 parts by mass of the total amount of (A)+(B). An amount of the viscosity modifier (D) being in the above range offers an advantage that good application workability is attained in the application of the putty coating composition. The above amount means parts by mass of a solid or parts by mass of a component.

Abrasive modifier (E)

The base agent (I) contains an abrasive modifier (E). The abrasive modifier (E) is preferably a carbonate of one or more divalent metal elements. Examples of the divalent metal element include Group 2 metal elements such as Be, Mg, Ca, Sr, Ba, or Ra, and transition elements capable of having a divalent ionic structure (for example, Fe, Ti, Cr, Mn, Co, Ni, Cu, Zn, Y, Zr, Nb, Mo, Tc, Ru, Rh, or Pd). The carbonate salt of the divalent metal element may be a single salt or a double salt, and may contain two or more kinds of divalent metal elements.

Examples of the carbonate salt include magnesium carbonate, iron(II) carbonate, and dolomite ($CaMg(CO_3)_2$).

When the putty coating composition contains the abrasive modifier (E), good abrasive is obtained in a putty coating film formed by applying the putty coating composition. This offers an advantage that the sanding workability after putty application is improved and the sanding resistance of the coating film is improved.

The amount of the abrasive modifier (E) with respect to the total amount of the unsaturated polyester resin (A) and the unsaturated monomer (B) contained in the putty coating composition is preferably in a range of 5 to 100 parts by mass, more preferably in a range of 10 to 50 parts by mass, and still more preferably in a range of 20 to 50 parts by mass, with respect to 100 parts by mass of the total amount of (A)+(B). The above amount means parts by mass of a solid or parts by mass of a component.

Other components in base agent

The base agent (I) may further contain an aromatic group-containing tertiary amine compound as a curing accelerator, as necessary. Examples of the aromatic group-containing tertiary amine compound include N,N-substituted anilines such as N,N-dimethylaniline, N,N-diethylaniline, p-toluidine, N,N-dimethyl-p-toluidine, N,N-bis(2-hydroxyethyl)-p-toluidine, 4-(N,N-dimethylamino)benzaldehyde, 4-[N,N-bis(2-hydroxyethyl)amino]benzaldehyde, 4-(N-methyl-N-hydroxyethylamino)benzaldehyde, N,N-bis(2-hydroxypropyl)-p-toluidine, N-ethyl-m-toluidine, m-toluidine, pyridine, phenylmorpholine, piperidine, N,N-bis(hydroxyethyl)aniline, and diethanolaniline; N,N-substituted-p-toluidines such as N,N-alkyl-substituted-p-toluidine; 4-(N,N-substituted amino)benzaldehydes such as 4-(N,N-alkyl-substituted amino)benzaldehyde; dimethylamino group-containing benzoic acids and esters thereof such as 4-dimethylaminobenzoic acid, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 3-dimethylaminobenzoic acid, ethyl 3-dimethylaminobenzoate, (n-butoxy)ethyl 3-dimethylaminobenzoate, isoamyl 3-dimethylaminobenzoate, 2-ethylhexyl 3-dimethylaminobenzoate, 2-dimethylaminobenzoic acid, ethyl 2-dimethylaminobenzoate, (n-butoxy)ethyl 2-dimethylaminobenzoate, isoamyl 2-dimethylaminobenzoate, and 2-ethylhexyl 2-dimethylaminobenzoate; and the like. These may be used singly, or two or more of them may be used in combination.

When the base agent (I) contains an aromatic group-containing tertiary amine compound, the aromatic group-containing tertiary amine compound functions as a curing accelerator. Use of the aromatic group-containing tertiary amine compound in the putty coating composition is advantageous in that the curing reaction of the putty coating composition is accelerated.

When the putty coating composition contains an aromatic group-containing tertiary amine compound, the amount of the aromatic group-containing tertiary amine compound with respect to the total amount of the unsaturated polyester resin (A) and the unsaturated monomer (B) is preferably in a range of 0.1 to 10 parts by mass, and more preferably in a range of 0.2 to 3 parts by mass, with respect to 100 parts by mass of the total amount of (A)+(B). Use of the aromatic group-containing tertiary amine compound in the putty coating composition is advantageous in that the curing reaction of the putty coating composition is accelerated. The above amount means parts by mass of a solid or parts by mass of a component.

The putty coating composition may further contain an organic acid metal salt having a curing acceleration function, such as cobalt naphthenate, manganese naphthenate, calcium naphthenate, cobalt octenate, cobalt octylate, manganese octylate, and calcium octylate, as necessary.

The base agent (I) may further contain a curing inhibitor, as necessary. When the base agent (I) contains a curing inhibitor, it offers an advantage that the curing reaction rate after the application of the putty coating composition can be suitably controlled and application workability can be improved. Examples of the curing inhibitor include phenolic compounds such as hydroquinone, hydroquinone monomethyl ether, toluhydroquinone, p-benzoquinone, 2,5-di-t-butyl-p-quinone, 2,5-dit-amylhydroquinone, 2,5-di-t-butylhydroquinone, mono-t-butylhydroquinone, 2,6-di-t-butyl-p-cresol, and t-butylcatechol.

When the putty coating composition contains a curing inhibitor, the amount of the curing inhibitor with respect to the total amount of the unsaturated polyester resin (A) and the unsaturated monomer (B) is preferably in a range of 0.01 to 0.5 parts by mass, and more preferably in a range of 0.03 to 0.2 parts by mass, with respect to 100 parts by mass of the total amount of (A)+(B). An amount of the curing inhibitor being in the above range offers an advantage that the curing reaction rate during and after the application of the putty coating composition can be suitably controlled and application workability such as pot life and sagging resistance can be improved. The above amount means parts by mass of a solid or parts by mass of a component.

The putty coating composition may contain both the aromatic group-containing tertiary amine compound and the curing inhibitor. In this case, there is an advantage that application workability and pot life during airless spraying of the putty coating composition can be controlled and workability while sanding a putty coating film formed by application, the flexibility of the putty coating film, and the like can be improved.

Organic peroxide (F)

In the putty coating composition, the organic peroxide (F) is contained in the curing agent (II). The organic peroxide (F) is a compound that generates radicals by heat, ultraviolet rays, or the like, and is a component that functions as a polymerization initiator for the radical polymerization reaction of the unsaturated polyester resin (A) with the unsaturated monomer (B).

Examples of the organic peroxide (F) include ketone peroxide compounds such as methyl ethyl ketone peroxide, cyclohexanone peroxide, 3,3,5-trimethylcyclohexanone peroxide, and methylcyclohexanone peroxide; peroxyketal compounds such as 1,1-bis(tert-butylperoxy)-3,3,5-trimethylcyclohexane, 1,1-bis(tert-butylperoxy)cyclohexane, n-butyl 4,4-bis(tert-butylperoxy)valerate, 2,2-bis(4,4-di-tert-butylperoxycyclohexyl)propane, 2,2-bis(4,4-di-tert-amylperoxycyclohexyl)propane, 2,2-bis(4,4-di-tert-hexylperoxycyclohexyl)propane, 2,2-bis(4,4-di-tert-octylperoxycyclohexyl)propane, and 2,2-bis(4,4-dicumylperoxycyclohexyl)propane; hydroperoxide compounds such as cumene hydroperoxide and 2,5-dimethylhexane-2,5-dihydroperoxide; dialkyl peroxide compounds such as 1,3-bis(tert-butylperoxy-m-isopropyl)benzene, 2,5-dimethyl-2,5-di(tert-butylperoxy)hexane, diisopropylbenzene peroxide, tert-butylcumyl peroxide, and di-tert-butyl peroxide; diacyl peroxide compounds such as decanoyl peroxide, lauroyl peroxide, benzoyl peroxide, and 2,4-dichlorobenzoyl peroxide; peroxycarbonate compounds such as bis(tert-butylcyclohexyl) peroxydicarbonate; peroxyester compounds such as tert-butyl peroxy-2-ethylhexanoate, tert-butyl peroxybenzoate, and 2,5-dimethyl-2,5-di(benzoylperoxy)hexane; and the like. These may be used singly or two or more of them may be used in combination.

The amount of the organic peroxide (F) with respect to the total amount of the unsaturated polyester resin (A) and the unsaturated monomer (B) contained in the putty coating composition is preferably in a range of 2 to 35 parts by mass, more preferably in a range of 2 to 30 parts by mass, and still more preferably in a range of 2 to 20 parts by mass, with respect to 100 parts by mass of the total amount of (A)+(B). An amount of the organic peroxide (F) being in the above range offers an advantage that the curing reaction rate during and after the application of the putty coating composition can be suitably controlled and application workability such as pot life and sagging resistance can be improved. The above amount means parts by mass of a solid or parts by mass of a component.

Plasticizer (G)

The curing agent (II) in the putty coating composition further contain a plasticizer (G) in addition to the organic peroxide (F). Examples of the plasticizer (G) contained in the curing agent (II) include diesters of dicarboxylic acids (for example, dialkyl phthalates such as dimethyl phthalate, diethyl phthalate, and dioctyl phthalate, dialkyl sebacates such as dibutyl sebacate, dialkyl maleates such as dimethyl maleate, and dialkyl adipates such as dialkyl adipate), and diesters of diols such as diethylene glycol dibenzoate. The plasticizer (G) may also be contained in the base agent (I) in the putty coating composition, as necessary.

The amount of the plasticizer (G) with respect to the total amount of the unsaturated polyester resin (A) and the unsaturated monomer (B) contained in the putty coating composition is preferably in a range of 0.5 to 18 parts by mass, more preferably in a range of 1 to 18 parts by mass, and still more preferably in a range of 2 to 10 parts by mass, with respect to 100 parts by mass of the total amount of (A)+(B). An amount of the plasticizer (G) being in the above range offers an advantage that good flexibility can be imparted to a resulting putty coating film. The above amount means parts by mass of a solid or parts by mass of a component.

The base agent (I) and the curing agent (II) may contain additives and the like other than the above components, as necessary. Examples of the additives include various organic solvents, surface conditioning agents such as silicone oil, surfactants, various waxes, ultraviolet stabilizers, ultraviolet absorbers, low shrinkage agents, antioxidants, flame retardants, stabilizers, pigment dispersants, modifying resins, thixotropic agents, thixotropic auxiliaries, antifoaming agents, leveling agents, and silane coupling agents.

Putty coating composition and putty coating film

The base agent (I) in the putty coating composition can be prepared by mixing the unsaturated polyester resin (A), the unsaturated monomer (B), the filler (C), the viscosity modifier (D), the abrasive modifier (E), and other components as necessary by a method commonly used by those skilled in the art.

The viscosity of the base agent (I) at 23°C is in a range of 0.5 to 130 Pa·s, and more preferably in a range of 1 to 100 Pa·s. The viscosity of the base agent (I) beingin the above range offers an advantage that the mixability of the base agent with the curing agent, application workability, and the like can be further improved when the resulting putty coating composition is applied. The viscosity of the base agent (I) at 23°C can be measured using a cylindrical rotational viscometer, for example, Viscotester VT-04F (manufactured by RION Co., Ltd.).

The curing agent (II) in the putty coating composition can be prepared by mixing the organic peroxide (F), the plasticizer (G), and other components as necessary by a method commonly used by those skilled in the art.

The viscosity of the curing agent (II) at 23°C is in a range of 5 to 20 mPa·s, and preferably in a range of 8 to 15 mPa s. The viscosity of the curing agent (II) being in the above range offers an advantage that the mixability of the base agent with the curing agent, application workability, and the like can be further improved when the resulting putty coating composition is applied. The viscosity of the curing agent (II) can be measured using a B-type viscometer, for example, VISCOMETER TVB-10 (manufactured by Toki Sangyo Co., Ltd.).

The putty coating composition of the present disclosure is a two-component curable coating composition, and is used after mixing a base agent (I) and a curing agent (II) immediately before use. The base agent (I) and the curing agent (II) constituting the putty coating composition each contain the components described above, and have the above specific viscosity range. Thus, for example, the putty coating composition can be suitably used in application with a spray applicator including a static mixer unit described below.

The putty coating composition is preferably applied using a spray applicator including a static mixer unit. The static mixer is a part where a fluid such as a liquid is stirred and mixed, and has an advantage that the fluid can be effectively stirred and mixed by generating turbulence (turbulent flow such as vortex flow) in a flow path by installing a mixing means in the flow path. The putty coating composition can be applied, for example, by pressure-feeding the base agent (I) and the curing agent (II) to a static mixer in advance through different introduction tubes, mixing the ingredients in a static mixer unit, then introducing the resulting mixture to a spray applicator such as a spray gun, and applying the mixture. Use of such a spray applicator including a static mixer unit is advantageous in that it offers superior application workability because the putty coating composition can be applied without strictly receiving restriction on the pot life of the putty coating composition.

In the application of the putty coating composition, it is preferable to use an airless spray applicator as a spray applicator. The airless spray applicator has an advantage that the spray applicator has a reduced weight and therefore is superior in application workability because the applicator is not accompanied by compressed air. The coating material pressure of the base agent (I) by the airless spray applicator including the static mixer unit is, for example, preferably in a range of 10 to 45 MPa, and more preferably in a range of 15 to 30 MPa. The coating material pressure of the curing agent (II) is, for example, preferably in a range of 10 to 45 MPa, and more preferably in a range of 15 to 30 MPa.

As the airless spray applicator including a static mixer unit, a commercially available applicator may be used. Examples of the commercially available product include APW series manufactured by Asahi Sunac Corporation.

In the putty coating composition, the volume ratio of the base agent (I) and the curing agent (II) is preferably in a range of the base agent (I):the curing agent (II) = 100:2 to 100:25, more preferably in a range of 100:2 to 100:20, still more preferably in a range of 100:4 to 100:20, and further preferably in a range of 100:5 to 100: 10. The volume ratio of the base agent (I) and the curing agent (II) being in the above range offers an advantage that the mixability of the base agent and the curing agent can be further improved at the time of applying the putty coating composition.

In one embodiment, the mass ratio of the base agent (I) and the curing agent (II) in the putty coating composition is preferably in a range of the base agent (I):the curing agent (II) = 100:2 to 100:30, more preferably in a range of 100:2 to 100:20, still more preferably in a range of 100:2 to 100:15, and further preferably in a range of 100:2 to 100:10. That the mass ratio of the base agent (I) and the curing agent (II) is in the above range offers an advantage that the mixability of the base agent and the curing agent can be further improved at the time of applying the putty coating composition.

The base agent (I) and the curing agent (II) can be stirred and mixed, for example, during line transportation instead of the static mixer, or can be mixed by a common mixing method immediately before spray application.

The Ti value (also referred to as "thixotropic index") in the mixture of the base agent (I) and the curing agent (II) is preferably in a range of 3 to 6, and more preferably in a range of 3 to 5. The Ti value being in the above range offers an advantage that application workability such as sagging resistance of the resulting putty coating composition can be further improved. Here, the Ti value is a parameter indicating the structural viscosity of the coating composition, that is, the property of falling into a gel-like state when stirred at a constant temperature and returning to a gel-like state again when left standing. The larger the Ti value is, the more effective it is for controlling the occurrence of sagging.

In the present disclosure, the Ti value means a value determined by measuring a viscosity (Pa·s) at a rotation speed of 6 rpm and a viscosity (Pa·s) at a rotation speed of 60 rpm at 25°C using a rotational viscometer, for example, a B-type viscometer (VISCOMETER TVB-10 manufactured by Toki Sangyo Co., Ltd.) and then calculating a Ti value by the formula shown below. The viscosity at 6 rpm and the viscosity at 60 rpm are values measured within 5 minutes after mixing the base agent (I) and the curing agent (II).

$$\text{Ti value} = (\text{viscosity at 6 rpm})/(\text{viscosity at 60 rpm})$$

The base material constituting the article to be coated to which the putty coating composition is applied is not particularly limited, and examples thereof include wood, metal, glass, cloth, plastics, expanded polystyrene, concrete, and ceramic materials. Examples of the base material to constitute the article to be coated include metal base materials such as iron, copper, aluminum, tin, zinc, and alloys containing these metals. Such a substrate may be subjected to chemical conversion treatment (for example, zirconium chemical conversion treatment or zinc phosphate chemical conversion treatment), as necessary, followed by application of the putty coating composition of the present invention to the substrate to form a coating film.

Examples of preferable articles to be coated include articles to be coated for general industrial use, for example, low-voltage and heavy electric machines, construction machines, agricultural machines, steel furniture, machine tools, large vehicles, hulls, aluminum building materials, ceramic building materials, buildings, and bridges. More specific articles to be coated include large vehicles such as railway vehicles and hulls.

After the putty coating composition is applied to an article to be coated to form a putty coating film, the formed putty coating film may be sanded, as necessary. In the sanding of the putty coating film, for example, sanding can be conducted using paper, a sander, a disc grinder, or the like.

The use of the putty coating composition assures a putty coating film to be formed by airless spraying. The putty coating composition can be particularly suitably used in application using an airless spray applicator including a static mixer unit. This is based on the fact that the base agent (I) and the curing agent (II) constituting the putty coating composition contain the components each described above, and that they assures the viscosities of the base agent (I) and the curing agent (II) to be brought into suitable ranges through mixing with a static mixer. Use of the putty coating composition offers an advantage that the time required for the putty application step can be shortened and the labor of operators can be reduced. In particular, in the case of forming a putty coating film by airless spraying, for example, application can be performed more easily than in the case of application using a spatula. Furthermore, a thick putty coating film can be easily formed, and the formed putty coating film can be inhibited from sagging even when the film is thick.

EXAMPLES

The present invention will be described more specifically with reference to the following examples, but the present invention is not limited to the examples. In the examples, "parts" and "%" are on a mass basis unless otherwise indicated.

Example 1 Preparation of putty coating composition (1)

<Base agent>

Base agent 1 was prepared by mixing 310 parts by mass of SUNDHOMA CN-351 as the unsaturated polyester resin (A1), 110 parts by mass of styrene as the unsaturated monomer (B1), 225 parts by mass of SUPER SS as the filler (C1), 3 parts by mass of BENTONE 27 as the viscosity modifier (D1), and 140 parts by mass of MICRODOL 1 as the abrasive modifier (E1) with a DISPER.

<Curing agent>

Curing agent 1 was prepared by mixing 27 parts by mass of methyl ethyl ketone peroxide as the organic peroxide (F1) and 13 parts by mass of dimethyl phthalate as the plasticizer (G1) with a DISPER.

<Production example of test plate>

A 0.8 mm thick, 70 × 150 mm sized JIS G 3141 (SPCC-SD) cold-rolled steel sheet was subjected to solvent degreasing, and then putty coating composition 1 was prepared by mixing the above-prepared base agent 1 and curing agent 1 with a DISPER in the formulation given in the following table. The putty coating composition 1 obtained was applied to a surface of the steel sheet using an airless spray applicator so as to have a dry film thickness of 1 mm, and dried at 60°C for 2 hours to form a putty coating film.

Examples 2 to 20 and Comparative Examples 1 to 4

Putty coating compositions were prepared in the same manner as in Example 1 except that in the preparation of the base agent and the curing agent, the ingredients and amounts were changed to those given in the following tables. The base agents and curing agents obtained were mixed in the formulations given in Tables 1A to 1E below, and putty coating films were formed by the same procedure as in Example 1.

[Table 1A]

| | | Example 1 | Example 2 | Example 3 | Example 4 | Example 5 |
|---|---|---|---|---|---|---|
| Base agent (I) | | | | | | |
| Unsaturated polyester resin (A) | (A1) | 310 | 310 | 310 | 310 | 310 |
| | (A2) | | | | | |
| Unsaturated monomer (B) | (B1) | 110 | 6 | 537 | 110 | 110 |
| | (B2) | | | | | |
| Filler (C) | (C1) | 225 | 225 | 225 | 225 | 225 |
| | (C2) | | | | | |
| | (C3) | | | | | |
| Viscosity modifier (D) | (D1) | 3 | 3 | 3 | 3 | 3 |
| | (D2) | | | | | |
| Abrasive modifier (E) | (E1) | 140 | 140 | 140 | 140 | 300 |
| | (E2) | | | | | |
| Curing agent (II) | | | | | | |
| Organic peroxide (F) | (F1) | 74 | 74 | 74 | 17 | 305 |
| | (F2) | | | | | |
| Plasticizer (G) | (G1) | 13 | 13 | 13 | 2 | 49 |
| | (G2) | | | | | |
| Other solvents | | | | | 31 | |

10

[Table 1B]

| | | Example 6 | Example 7 | Example 8 | Example 9 | Example 10 | Example 11 |
|---|---|---|---|---|---|---|---|
| Base agent (I) | | | | | | | |
| Unsaturated polyester resin (A) | (A1) | 250 | 310 | 310 | 310 | | 310 |
| | (A2) | | | | | 310 | |
| Unsaturated monomer (B) | (B1) | 10 | 110 | 210 | 30 | 110 | |
| | (B2) | | | | | | 110 |
| Filler (C) | (C1) | 225 | 225 | 225 | 225 | 225 | 225 |
| | (C2) | | | | | | |
| | (C3) | | | | | | |
| Viscosity modifier (D) | (D1) | 3 | 3 | 3 | 3 | 3 | 3 |
| | (D2) | | | | | | |
| Abrasive modifier (E) | (E1) | 230 | 140 | 140 | 140 | 140 | 140 |
| | (E2) | | | | | | |
| Curing agent (II) | | | | | | | |
| Organic peroxide (F) | (F1) | 23 | 74 | 74 | 74 | 74 | 74 |
| | (F2) | | | | | | |
| Plasticizer (G) | (G1) | 7 | 13 | 13 | 13 | 13 | 13 |
| | (G2) | | | | | | |
| Other solvents | | | 109 | | | | |

[Table 1C]

| | | Example 12 | Example 13 | Example 14 | Example 15 | Example 16 |
|---|---|---|---|---|---|---|
| Base agent (I) | | | | | | |
| Unsaturated polyester resin (A) | (A1) | 310 | 310 | 310 | 310 | 310 |
| | (A2) | | | | | |
| Unsaturated monomer (B) | (B1) | 110 | 110 | 110 | 110 | 110 |
| | (B2) | | | | | |
| Filler (C) | (C1) | | | 225 | 225 | 225 |
| | (C2) | 225 | | | | |
| | (C3) | | 225 | | | |
| Viscosity modifier (D) | (D1) | 3 | 3 | | 3 | 3 |
| | (D2) | | | 3 | | |
| Abrasive modifier (E) | (E1) | 140 | 140 | 140 | | 140 |
| | (E2) | | | | 140 | |
| Curing agent (II) | | | | | | |
| Organic peroxide (F) | (F1) | 74 | 74 | 74 | 74 | |
| | (F2) | | | | | 36 |
| Plasticizer (G) | (G1) | 13 | 13 | 13 | 13 | |
| | (G2) | | | | | 13 |

(continued)

|  | Example 12 | Example 13 | Example 14 | Example 15 | Example 16 |
|---|---|---|---|---|---|
| Other solvents |  |  |  |  |  |

[Table 1D]

|  |  | Example 17 | Example 18 | Example 19 | Example 20 |
|---|---|---|---|---|---|
| Base agent (I) |  |  |  |  |  |
| Unsaturated polyester resin (A) | (A1) | 250 | 310 | 310 | 310 |
|  | (A2) |  |  |  |  |
| Unsaturated monomer (B) | (B1) | 110 | 600 | 320 | 110 |
|  | (B2) |  |  |  |  |
| Filler (C) | (C1) | 225 | 225 | 225 | 225 |
|  | (C2) |  |  |  |  |
|  | (C3) |  |  |  |  |
| Viscosity modifier (D) | (D1) | 3 | 3 | 3 | 3 |
|  | (D2) |  |  |  |  |
| Abrasive modifier (E) | (E1) | 300 | 140 | 140 | 140 |
|  | (E2) |  |  |  |  |
| Curing agent (II) |  |  |  |  |  |
| Organic peroxide (F) | (F1) | 317 | 74 | 74 | 215 |
|  | (F2) |  |  |  |  |
| Plasticizer (G) | (G1) | 56 | 13 | 13 | 13 |
|  | (G2) |  |  |  |  |
| Other solvents |  |  | 37 | 13 |  |

[Table 1E]

|  |  | Comparative Example 1 | Comparative Example 2 | Comparative Example 3 | Comparative Example 4 |
|---|---|---|---|---|---|
| Base agent (I) |  |  |  |  |  |
| Unsaturated polyester resin (A) | (A1) | 310 | 310 | 310 | 310 |
|  | (A2) |  |  |  |  |
| Unsaturated monomer (B) | (B1) | 110 | 110 | 110 | 1000 |
|  | (B2) |  |  |  |  |
| Filler (C) | (C1) | 225 | 225 | 225 | 225 |
|  | (C2) |  |  |  |  |
|  | (C3) |  |  |  |  |
| Viscosity modifier (D) | (D1) |  | 3 | 3 | 3 |
|  | (D2) |  |  |  |  |

(continued)

| | | Comparative Example 1 | Comparative Example 2 | Comparative Example 3 | Comparative Example 4 |
|---|---|---|---|---|---|
| Abrasive modifier (E) | (E1) | 140 | | 140 | 140 |
| | (E2) | | | | |
| Curing agent (II) | | | | | |
| Organic peroxide (F) | (F1) | 74 | 74 | | 74 |
| | (F2) | | | | |
| Plasticizer (G) | (G1) | 13 | 13 | 13 | 13 |
| | (G2) | | | | |
| Other solvents | | | | 21 | 78 |

The putty coating compositions prepared in the above Examples and Comparative Examples were subjected to the following evaluations. The results of the evaluations are shown in the following Tables 2A to 2E.

[Table 2A]

| | Example 1 | Example 2 | Example 3 | Example 4 | Example 5 |
|---|---|---|---|---|---|
| Viscosity of base agent (1) (Pa·s) | 7 | 130 | 0.5 | 7 | 7 |
| Viscosity of curing agent (II) (mPa·s) | 12 | 12 | 12 | 12 | 20 |
| Amount of base agent (I) (voluminal amount: ml) | 518 | 518 | 518 | 518 | 623 |
| Amount of curing agent (II) (voluminal amount: ml) | 36 | 36 | 36 | 36 | 135 |
| Volume ratio of base agent (I) and curing agent (II) | 100:7 | 100:7 | 100:7 | 100:7 | 100:22 |
| Mass ratio of base agent (I) and curing agent (II) | 100:6 | 100:7 | 100:4 | 100:5 | 100:19 |
| Mass ratio of (A) and (B), (A):(B) | 100:53 | 100:3 | 100:260 | 100:53 | 100:53 |
| Mass ratio of (F) to the total amount of (A) and (B) ((A)+(B):(F)) | 100:8.5 | 100:12.8 | 100:3.6 | 100:2 | 100:35 |
| Mass ratio of (G) to the total amount of (A) and (B) ((A)+(B):(G)) | 100:4.1 | 100:6.1 | 100:1.7 | 100:0.6 | 100:15.3 |
| Mixability | ⊙ | ⊙ | ⊙ | ⊙ | ⊙ |
| Pot life (min) | 54 | 45 | 52 | 35 | 60 |
| Ti value | 3.2 | 6.0 | 3.0 | 4.1 | 3.3 |
| Airless spray application workability (μm) | 800 | 800 | 700 | 800 | 500 |
| Adherability (kg/cm$^2$) | 23 | 19 | 22 | 24 | 25 |
| Water resistance | 5 | 5 | 5 | 5 | 5 |
| Moisture resistance | 5 | 5 | 5 | 5 | 5 |
| Humidity and cool-heat repeatability | ○ | ○ | ○ | ○ | ○ |
| Flexibility (cupping resistance) (mm) | 3.2 | 3.3 | 2.5 | 2.4 | 1.3 |
| Flexibility (folding resistance) | ○ | ○ | ○ | ○ | ○ |
| Flexibility (impact resistance) | 50 < | 50 < | 50 < | 30 | 50 < |

(continued)

|  | Example 1 | Example 2 | Example 3 | Example 4 | Example 5 |
|---|---|---|---|---|---|
| Sanding resistance | ⊙ | ⊙ | ⊙ | ⊙ | ⊙ |

[Table 2B]

|  | Example 6 | Example 7 | Example 8 | Example 9 | Example 10 | Example 11 |
|---|---|---|---|---|---|---|
| Viscosity of base agent (I) (Pa·s) | 130 | 7 | 0.9 | 30 | 7 | 7 |
| Viscosity of curing agent (II) (mPa·s) | 15 | 5 | 12 | 12 | 12 | 12 |
| Amount of base agent (I) (voluminal amount: ml) | 492 | 518 | 518 | 518 | 518 | 518 |
| Amount of curing agent (II) (voluminal amount: ml) | 22 | 130 | 36 | 36 | 36 | 36 |
| Volume ratio of base agent (I) and curing agent (II) | 100:2 | 100:25 | 100:7 | 100:7 | 100:7 | 100:7 |
| Mass ratio of base agent (I) and curing agent (II) | 100:2 | 100:22 | 100:5 | 100:6 | 100:6 | 100:6 |
| Mass ratio of (A) and (B), (A):(B) | 100:6 | 100:53 | 100:102 | 100:11 | 100:53 | 100:53 |
| Mass ratio of (F) to the total amount of (A) and (B) ((A)+(B):(F)) | 100:4.7 | 100:8.5 | 100:6.5 | 100:11.4 | 100:8.5 | 100:8.5 |
| Mass ratio of (G) to the total amount of (A) and (B) ((A)+(B):(G)) | 100:4.2 | 100:4.1 | 100:3.1 | 100:5.4 | 100:4.1 | 100:4.1 |
| Mixability | ○ | ⊙ | ⊙ | ⊙ | ⊙ | ⊙ |
| Pot life (min) | 48 | 58 | 51 | 49 | 40 | 53 |
| Ti value | 4.2 | 3.5 | 3.5 | 6.0 | 5.0 | 4.5 |
| Airless spray application workability (μm) | 800 | 700 | 700 | 800 | 800 | 800 |
| Adherability (kg/cm$^2$) | 22 | 20 | 22 | 20 | 23 | 21 |
| Water resistance | 5 | 5 | 5 | 5 | 5 | 5 |
| Moisture resistance | 5 | 5 | 5 | 5 | 5 | 5 |
| Humidity and cool-heat repeatability | ○ | ○ | ○ | ○ | ○ | ○ |
| Flexibility (cupping resistance) (mm) | 3.2 | 3.2 | 3.1 | 2.6 | 3.2 | 2.8 |
| Flexibility (folding resistance) | ○ | ○ | ○ | ○ | ○ | ○ |
| Flexibility (impact resistance) | 50 < | 50 < | 50 < | 50 < | 50 < | 50 < |
| Sanding resistance | ⊙ | ○ | ⊙ | ⊙ | ⊙ | ⊙ |

[Table 2C]

| | Example 12 | Example 13 | Example 14 | Example 15 | Example 16 |
|---|---|---|---|---|---|
| Viscosity of base agent (I) (Pa·s) | 7 | 7 | 7 | 7 | 7 |
| Viscosity of curing agent (II) (mPa·s) | 12 | 12 | 12 | 12 | 12 |
| Amount of base agent (I) (voluminal amount: ml) | 518 | 518 | 518 | 518 | 518 |
| Amount of curing agent (II) (voluminal amount: ml) | 36 | 36 | 36 | 36 | 36 |
| Volume ratio of base agent (I) and curing agent (II) | 100:7 | 100:7 | 100:7 | 100:7 | 100:7 |
| Mass ratio of base agent (1) and curing agent (II) | 100:6 | 100:6 | 100:6 | 100:6 | 100:6 |
| Mass ratio of (A) and (B), (A):(B) | 100:53 | 100:53 | 100:53 | 100:53 | 100:53 |
| Mass ratio of (F) to the total amount of (A) and (B) ((A)+(B):(F)) | 100:8.5 | 100:8.5 | 100:8.5 | 100:8.5 | 100:8.5 |
| Mass ratio of (G) to the total amount of (A) and (B) ((A)+(B):(G)) | 100:4.1 | 100:4.1 | 100:4.1 | 100:4.1 | 100:4.1 |
| Mixability | ⊙ | ⊙ | ⊙ | ⊙ | ⊙ |
| Pot life (min) | 54 | 47 | 46 | 45 | 51 |
| Ti value | 4.1 | 3.9 | 4.2 | 4.3 | 3.7 |
| Airless spray application workability (μm) | 800 | 800 | 800 | 800 | 800 |
| Adherability (kg/cm$^2$) | 21 | 23 | 25 | 20 | 20 |
| Water resistance | 5 | 5 | 5 | 5 | 5 |
| Moisture resistance | 5 | 5 | 5 | 5 | 5 |
| Humidity and cool-heat repeatability | ○ | ○ | ○ | ○ | ○ |
| Flexibility (cupping resistance) (mm) | 3.2 | 3.0 | 3.5 | 2.7 | 2.7 |
| Flexibility (folding resistance) | ○ | ○ | ○ | ○ | ○ |
| Flexibility (impact resistance) | 50 < | 50 < | 50 < | 50 < | 50 < |
| Sanding resistance | ⊙ | ⊙ | ⊙ | ⊙ | ⊙ |

[Table 2D]

| | Example 17 | Example 18 | Example 19 | Example 20 |
|---|---|---|---|---|
| Viscosity of base agent (I) (Pa s) | 7 | 0.6 | 0.7 | 0.7 |
| Viscosity of curing agent (II) (mPa·s) | 10 | 12 | 12 | 12 |
| Amount of base agent (I) (voluminal amount: ml) | 584 | 1,000 | 733 | 518 |
| Amount of curing agent (II) (voluminal amount: ml) | 134 | 70 | 51 | 81 |
| Volume ratio of base agent (I) and curing agent (II) | 100:24 | 100:7 | 100:7 | 100:16 |
| Mass ratio of base agent (I) and curing agent (II) | 100:21 | 100:7 | 100:6 | 100:13 |
| Mass ratio of (A) and (B), (A):(B) | 100:66 | 100:290 | 100:155 | 100:53 |
| Mass ratio of (F) to the total amount of (A) and (B) ((A)+(B):(F)) | 100:42 | 100:3.3 | 100:5.1 | 100:25 |

(continued)

| | Example 17 | Example 18 | Example 19 | Example 20 |
|---|---|---|---|---|
| Mass ratio of (G) to the total amount of (A) and (B) ((A)+(B):(G)) | 100:20.0 | 100:1.6 | 100:2.4 | 100:4.1 |
| Mixability | ⊙ | ⊙ | ⊙ | ⊙ |
| Pot life (min) | 70 | 50 | 51 | 59 |
| Ti value | 2.6 | 2.5 | 2.9 | 3.7 |
| Airless spray application workability ($\mu$m) | 500 | 500 | 500 | 800 |
| Adherability (kg/cm$^2$) | 20 | 20 | 22 | 22 |
| Water resistance | 5 | 5 | 5 | 5 |
| Moisture resistance | 5 | 5 | 5 | 5 |
| Humidity and cool-heat repeatability | △ | △ | ○ | ○ |
| Flexibility (cupping resistance) (mm) | 3.5 | 2.7 | 3.1 | 3.1 |
| Flexibility (folding resistance) | ○ | ○ | ○ | △ |
| Flexibility (impact resistance) | 50 < | 50 < | 50 < | 50 < |
| Sanding resistance | ○ | ⊙ | ⊙ | ⊙ |

[Table 2E]

| | Comparative Example 1 | Comparative Example 2 | Comparative Example 3 | Comparative Example 4 |
|---|---|---|---|---|
| Viscosity of base agent (I) (Pa·s) | 7 | 7 | 7 | 0.1 |
| Viscosity of curing agent (II) (mPa·s) | 12 | 12 | | 12 |
| Amount of base agent (I) (voluminal amount: ml) | 518 | 518 | 518 | 1,422 |
| Amount of curing agent (II) (voluminal amount: ml) | 36 | 36 | 36 | 70 |
| Volume ratio of base agent (I) and curing agent (II) | 100:7 | 100:7 | 100:7 | 100:7 |
| Mass ratio of base agent (I) and curing agent (II) | 100:6 | 100:7 | 100:5 | 100:7 |
| Mass ratio of (A) and (B), (A):(B) | 100:53 | 100:53 | 100:53 | 100:483 |
| Mass ratio of (F) to the total amount of (A) and (B) ((A)+(B):(F)) | 100:8.5 | 100:8.5 | 100:0 | 100:2.2 |
| Mass ratio of (G) to the total amount of (A) and (B) ((A)+(B):(G)) | 100:4.1 | 100:4.1 | 100:4.1 | 100:1.1 |
| Mixability | × | ⊙ | ⊙ | ⊙ |

(continued)

| | Comparative Example 1 | Comparative Example 2 | Comparative Example 3 | Comparative Example 4 |
|---|---|---|---|---|
| Pot life (min) | 58 | 55 | 120 < | 75 |
| Ti value | 2.2 | 3.4 | 3.2 | 2.1 |
| Airless spray application workability ($\mu$m) | 300 | 800 | Since the composition does not cure, a coated plate cannot be formed. | Since sagging property is significantly poor, a coated plate cannot be formed. |
| Adherability (kg/cm$^2$) | 23 | 22 | | |
| Water resistance | 5 | 3 | | |
| Moisture resistance | 5 | 3 | | |
| Humidity and cool-heat repeatability | ○ | △ | | |
| Flexibility (cupping resistance) (mm) | 2.3 | 2.4 | | |
| Flexibility (folding resistance) | ○ | ○ | | |
| Flexibility (impact resistance) | 50 < | 50 < | | |
| Sanding resistance | ⊙ | △ | | |

(3) Evaluation items

(Viscosity measurement)

The viscosity of the base agents was measured using a cylindrical rotational viscometer (VISCOTESTER VT-04F manufactured by RION Co., Ltd.; 23°C, rotation speed: 62.5 rpm).
The viscosity of the curing agents was measured using a B-type viscometer (VISCOMETER TVB-10 manufactured by Toki Sangyo Co., Ltd.: 23°C, rotation speed: 60 rpm).

<Performance evaluation>

(Mixability)

A base agent and a curing agent were mixed using a static mixer in a TwinControl (manufactured by J. Wagner GmbH), and after 5 minutes, the mixture was collected in a plastic cup, and the mixing state was visually evaluated. The evaluation criteria are as follows.

⊙: The whole is uniformly mixed without unevenness.
○: Although there is unevenness a slight part, the mixture is mixed almost uniformly.
×: There is unevenness and the mixture is not uniformly mixed.

(Pot life)

The pot life of a putty coating composition was measured and evaluated by the following method.
A base agent (50 parts by mass) was placed in a 1/12 L can, and immersed in a constant-temperature water bath at 20°C for 20 minutes or more.
Next, a prescribed amount of a curing agent was added, and at the same time, the mixture of the base agent and the curing agent was stirred with a spatula in the constant-temperature water bath for about 1 minute and mixed uniformly. With the time point at which the curing agent was added as a reference (time: 0 minute), at every 1 minute, one tip of a straightened paper clip (available from ASKUL Corporation, large size) was perpendicularly inserted by 2 cm into a putty coating composition (the mixture of the base agent and the curing agent) at the center of the surface thereof, and immediately pulled out. The time taken from the reference time to the time point when the hole formed at the time of pulling off no longer disappeared was taken as a pot life. A case where the pot life was 20 minutes or more and 70 minutes or less was regarded as acceptable, and in particular, a case where the pot life was 30 minutes or more and 60 minutes or less was determined to be more preferable. In addition, a case where even after a lapse of 120 minutes, a hole formed at the time of pulling off disappeared was expressed as "120 <".

The "prescribed amount" of the curing agent is a value determined such that the mass ratio of the base agent (50 parts by mass) and the curing agent was equal to the mass ratio of the base agent and the curing agent given in Tables 2A to 2E.

(Ti value)

A base agent (100 parts by mass) was placed in a 200 mL plastic cup, and immersed in a constant-temperature water bath at 25°C for 20 minutes or more. Next, a prescribed amount of a curing agent was added, and at the same time, the mixture of the base agent and the curing agent was stirred with a spatula in the constant-temperature water bath for about 1 minute and mixed uniformly. Within 5 minutes after the mixing, a viscosity (Pa s) at a rotation speed of 6 rpm and a viscosity (Pa·s) at a rotation speed of 60 rpm of the above-obtained putty coating composition (mixture of the base agent and the curing agent) were measured with a B-type viscometer VISCOMETER TVB-10 (manufactured by Toki Sangyo Co., Ltd.) and then a Ti value was calculated by the following formula.

$$Ti\ value = (viscosity\ at\ 6\ rpm)/(viscosity\ at\ 60\ rpm)$$

The "prescribed amount" of the curing agent is a value determined such that the mass ratio of the base agent (100 parts by mass) and the curing agent was equal to the mass ratio of the base agent and the curing agent given in Tables 2A to 2E.

(Airless spray application workability)

Using the putty coating composition prepared in each of Examples and Comparative Examples, the sagging generation limit film thickness was measured.
A tin plate (600 mm × 400 mm) was used as an article to which the putty coating composition was to be applied. The putty coating composition was applied by airless spray application under the following conditions, and the airless spray workability was evaluated.

<Airless spray application conditions>

Apparatus: pump: TwinControl (manufactured by J. Wagner GmbH); gun: AirCoat gun GM 4700AC (manufactured by J. Wagner GmbH)
Pump pressure: 0.3 MPa
Air pressure: 0.3 MPa
Distance from article to gun: 30 cm

<Application method>

To the article to be coated in a state of being held substantially vertically, application was conducted according to the following procedures.

Procedure 1. Application is conducted to the article to be coated.
Procedure 2. The article is dried at room temperature for 30 minutes.
Procedure 3. Application is conducted from the right edge toward the left edge.
Procedure 4. The article is dried at room temperature for 1 minute.
Procedure 5. Application is conducted with a few centimeters shift from the left edge.
Procedure 6. The article is dried at room temperature for 1 minute.
Procedure 7. Application is conducted with a further few centimeters shift to the right from the application start position in Procedure 5.

Procedure 8. Procedures 6 and 7 are repeated to form a coated plate with a film thickness gradient from the left edge to the right edge.

Procedure 9. The article is dried at room temperature for 30 minutes, and then dried at 60°C for 1 hour in a jet oven.

Procedure 10. The film thickness of a portion where sagging of the coating material occurs is measured, and the value obtained is taken as a sagging limit film thickness. A case where the sagging limit film thickness was 500 $\mu$m or more was regarded as acceptable.

(Adherability)

A test cylinder having a diameter of 20 mm was adhered to the surface of the putty coating film of each of the specimens obtained in the Examples and the Comparative Examples (adhesive: Araldite Rapid (manufactured by Huntsman Japan K.K.), drying condition: at 23°C for 24 hours). Thereafter, a tension (0.89 kg/s) was applied with a tensile tester (NXT-250P: manufactured by Toyama Sangyo Co., Ltd.), and the tension at which the test cylinder was peeled off was measured. Adherability was evaluated on the basis of this tension. A case where the tension was 15 kg/cm$^2$ or more was regarded as acceptable.

(Water resistance)

Each of the specimens (coated plates) obtained in the Examples and the Comparative Examples was immersed in water at 20°C for 168 hours, and then the appearance of the coating film was visually observed. The evaluation criteria are as follows.

5: No abnormality (blister) occurred in the coating film.
4: There is a blister less than 1 mm in diameter in a part of the coating film.
3: There is a blister 1 mm or more and less than 2 mm in diameter in a part of the coating film.
2: There is a blister 2 mm or more in diameter in a part of the coating film.

(Humidity resistance)

Each of the specimens (coated plates) obtained in the Examples and the Comparative Examples was set in a wet tester (CT-3, manufactured by Suga Test Instruments Co., Ltd.), and the appearance after a lapse of 48 hours was visually observed. Evaluation criteria are as follows.

5: No abnormality (blister) occurred in the coating film.
4: A blister less than 1 mm in diameter occurred in the coating film.
3: A blister 1 mm or more and less than 2 mm in diameter occurred in the coating film.
2: A blister 2 mm or more in diameter occurred in the coating film.

(Humidity and cool-heat repeatability)

For each of the specimens obtained in the Examples and the Comparative Examples, humidity and cool-heat repeatability was evaluated in accordance with JIS K 5600-7-4.

The specimen is immersed in water at 23 ± 2°C for 18 hours, immediately cooled in a thermostatic bath maintained at -20°C ± 2°C for 3 hours, and then heated in another thermostatic bath maintained at 50 ± 2°C for 3 hours. This operation was repeated seven times, and then the state of the coating film surface was visually observed. The evaluation criteria are as follows.

○: Abnormality (blister, whitening, and cracks) does not occur in the coating film.
△: Abnormality (only blister, and no whitening and no cracks) occurred in the coating film.
✕: Abnormality (blister, whitening, and cracks) occurred in the coating film.

(Flexibility) (Cupping resistance)

For the specimens (coated plates) obtained in Examples and Comparative Examples, flexibility (cupping resistance) was evaluated in accordance with JIS K 5600-5-2 (cupping test).

A specimen was extruded from the rear side of the coated surface thereof with a punch having a diameter of 20 mm using an automatic cupping tester HD-4525 (manufactured by Ueshima Seisakusho Co., Ltd.). The extrusion height at which cracks occurred in the coating film was evaluated as flexibility (cupping resistance). A case where the extrusion height was 1 mm or more was regarded as acceptable. The test was conducted at 23°C.

(Flexibility) (Folding resistance)

For the specimens obtained in the Examples and the Comparative Examples, folding resistance was evaluated in accordance with ASTM D522.

Using a conical mandrel testing machine (manufactured by TP Giken Co., Ltd.), the specimen was brought into contact with a mandrel having a diameter of 3/2 inch such that the putty coating film was on the outer side (the side not in contact with the mandrel), and was folded 180 degrees at a constant speed over about 1 second. The state of the putty coating film after the test was visually observed.

The evaluation criteria are as follows. The test was conducted at 23°C.

○: Neither flaws nor cracks occur in the coating film.
△: Cracks do not occur, but flaws occur in the coating film.
×: Cracks occur in the coating film.

(Flexibility) (Impact resistance)

For the specimens (coated plates) obtained in the Example and the Comparative Examples, their weight drop resistance was evaluated according to JIS K 5600-5-3 (a weight drop resistance test).

A 500 g weight was allowed to fall from a certain height using a DuPont's impact tester (shooting type 1/2 inch; manufactured by Ueshima Seisakusho Co., Ltd.) and the height at which cracks occurred was measured and flexibility (weight drop resistance) was evaluated. "50 <" in the tables indicates a case where no cracks occurred even when the weight was dropped from a height of 50 cm. a value of 20 cm or more was defined to be acceptable. The test was conducted at 23°C.

(Sanding resistance)

The specimens (coated plates) obtained in the Examples and the Comparative Examples were sanded with sanding paper (SUPER TACK POMMAX P120 manufactured by KOVAX Corporation) using a double action sander (manufactured by Compact Tool Co., Ltd., load: 750 g, air pressure: 0.6 MPa, rotational speed scale: 1), and sanding resistance was evaluated. The evaluation criteria are as follows.

⊙: The sanded powder (powder generated at the time of sanding) is smooth and does not adhere to the sanding paper.
○: The sanded powder is smooth but adheres to the sanding paper.
×: The sanded powder is sticky and also adheres to the sanding paper.

The components shown in tables are as follows.

Base agent (I)

Unsaturated polyester resin (A)

(A1) SUNDHOMA CN-351: manufactured by DIC Material Inc., number average molecular weight: 3,500, solid acid value: 15 mg KOH/g, pot life: 12 ± 5 minutes, solid concentration: 66.7 % by mass
(A2) VINIESTER Z3202N: manufactured by Japan Composite Co., Ltd., number average molecular weight: 2,000, solid acid value: 22 mg KOH/g, pot life: 10 ± 5 minutes, solid concentration: 66.0 % by mass

Unsaturated monomer (B)

(B1) Styrene monomer: manufactured by Chuo Kaseihin Co., Inc., containing 100 % by mass of styrene
(B2) Light Ester E: manufactured by Kyoeisha Chemical Co., Ltd., containing 100 % by mass of ethyl methacrylate

Filler (C)

(C1) SUPER SS: calcium carbonate manufactured by Maruo Calcium Co., Ltd., solid concentration: 100 % by mass
(C2) TIPAQUE R-820: titanium oxide manufactured by Ishihara Sangyo Kaisha, Ltd., solid concentration: 100 % by mass
(C3) CYANINE BLUE G-105R: copper phthalocyanine manufactured by Sanyo Color Works, Ltd., solid concentration: 100 % by mass

Viscosity modifier (D)

(D1) BENTONE 27: hectorite manufactured by Elementis Japan K.K., solid concentration: 100 % by mass
(D2) KUNIPIA F: natural montmorillonite manufactured by KUNIMINE INDUSTRIES CO., LTD., solid concentration: 100 % by mass

Abrasive modifier (E)

(E1) SSS talc (magnesium silicate manufactured by Maruo Calcium Co., Ltd.), solid concentration: 100 % by mass
(E2) MICRODOL 1: dolomite (($Mg \cdot Ca(CO_3)_2$)) manufactured by NORWEGIAN TALC, solid concentration: 100 % by mass

The pot life of an unsaturated polyester resin (A) was measured and evaluated by the following method.
As a solid content, 20.7 parts by mass of the unsaturated polyester resin (A) was put in a 1/12 L can, and immersed in a constant-temperature water bath at 20°C for 20 minutes or more.
Next, a mixture (curing agent mixture) prepared by mixing in advance 0.6 parts by mass of 6% cobalt naphthenate (Naphthlife Co6%X, manufactured by Sumika Enviro-Science Co., Ltd.; active ingredient concentration: 48 % by mass) as a curing accelerator, 7.8 parts by mass of methyl ethyl ketone peroxide (manufactured by Kayaku Nouryon Corporation, active ingredient concentration: 36.3 % by mass) as an organic peroxide, and 1.3 parts by mass of dimethyl phthalate (manufactured by Tokyo Chemical Industry Co., Ltd., active ingredient concentration: 99.0 % by mass) as a plasticizer was added, and at the same time, the mixture was stirred with a spatula for about 1 minute in a constant-temperature water bath, and uniformly mixed, affording a mixture. With the time point at which the curing agent mixture was added as a reference (time: 0 minute), at every 1 minute, one tip of a straightened paper clip (available from ASKUL Corporation, large size) was perpendicularly inserted by 2 cm into the mixture at the center of the surface thereof, and immediately pulled out. The time taken from the reference time to the time point when the hole formed at the time of pulling off no longer disappeared was taken as a pot life of the unsaturated polyester resin (A).

Curing agent (II)

Organic peroxide (F)

(F1) Methyl ethyl ketone peroxide (manufactured by Kayaku Nouryon Corporation, active ingredient concentration: 36.3 % by mass)
(F2) Benzoyl peroxide (manufactured by Tokyo Chemical Industry Co., Ltd., active ingredient concentration: 75.0 % by mass)

Plasticizer (G)

(G1) Dimethyl phthalate (manufactured by Tokyo Chemical Industry Co., Ltd., active ingredient concentration: 99.0 % by mass)

(G2) Dioctyl phthalate (manufactured by Tokyo Chemical Industry Co., Ltd., active ingredient concentration: 98.0 % by mass)

Other solvents: Xylene

All the putty coating compositions of the Examples described above were able to be applied with an airless spray, and their workability was good. By applying with an airless spray, the putty coating compositions were able to be more easily applied compared with the case of applying with a spatula, and putty coating films having a great sagging limit film thickness was easily obtained. Furthermore, the sanding resistance of the putty coating films obtained was also good.

In Comparative Example 1, no viscosity modifier (D) was added, and the mixability of the base agent (I) and the curing agent (II) was poor.

In Comparative Example 2, no abrasive modifier (E) was added, and the sanding resistance of the putty coating film formed was not good.

In Comparative Example 3, no organic peroxide (F) was added, the putty coating composition was not able to cure, so that evaluation as a coating film was impossible.

In Comparative Example 4, since the viscosity of the base agent (I) was low and the Ti value of the putty coating composition was also low, the sagging property of the composition was significantly poor, so that it was impossible to form a putty coating film by the same method as in Example 1.

Example 21

A 0.8 mm thick, 70 × 150 mm sized JIS G 3141 (SPCC-SD) cold-rolled steel sheet was subjected to solvent degreasing. Next, the base agent 1 and the curing agent 1 produced in Example 1 were charged to APW3000 (two-component airless spray applicator including a static mixer manufactured by Asahi Sunac Corporation), and application to a surface of the steel sheet was conducted by using APW3000 such that the dry film thickness was 700 μm.

As application conditions, the mixing ratio (volume ratio) of the base agent and the curing agent was 14: 1, the pressure ratio of the base agent and the curing agent was 1:33, the discharge rate was 3.7 L/min, and the discharge pressure was 18 MPa.

The putty coating film formed as described above was made to have a sandable surface by drying at 60°C for 2 hours.

INDUSTRIAL APPLICABILITY

Use of the putty coating composition offers an advantage that a putty coating film can be suitably formed with an airless spray. It assures an advantage that the time of the putty coating film formation step can be shortened and the labor of operators can be reduced.

**Claims**

1. A putty coating composition comprising a base agent (I) and a curing agent (II),

   wherein the base agent (I) comprises an unsaturated polyester resin (A), an unsaturated monomer (B), a filler (C), a viscosity modifier (D), and an abrasive modifier (E),
   wherein the curing agent (II) comprises an organic peroxide (F) and a plasticizer (G),
   wherein a viscosity of the base agent (I) at 23°C is in a range of 0.5 to 130 Pa·s,
   wherein a viscosity of the curing agent (II) at 23°C is in a range of 5 to 20 mPa·s, and
   wherein the viscosity modifier (D) comprises an inorganic laminar compound.

2. The putty coating composition according to claim 1, wherein a mass ratio of the organic peroxide (F) to a total amount of the unsaturated polyester resin (A) and the unsaturated monomer (B) contained in the putty coating composition is in a range of ((A)+(B)):(F) = 100:2 to 100:35.

3. The putty coating composition according to claim 1 or 2, wherein the putty coating composition is a coating composition for airless spray application by a static mixing system.

4. The putty coating composition according to any one of claims 1 to 3, wherein a mass ratio of the unsaturated polyester resin (A) and the unsaturated monomer (B) contained in the putty coating composition is in a range of (A):(B) = 100:3 to 100:260.

5. The putty coating composition according to any one of claims 1 to 4, wherein a volume ratio of the base agent (I) and the curing agent (II) in the putty coating composition is in a range of base agent (I):curing agent (II) = 100:2 to 100:25.

6. The putty coating composition according to any one of claims 1 to 5, wherein the inorganic laminar compound is at least one selected from the group consisting of organic bentonite and hectorite.

7. The putty coating composition according to any one of claims 1 to 6, wherein the abrasive modifier (E) is a carbonate salt of one or more divalent metal elements.

8. The putty coating composition according to any one of claims 1 to 7, wherein a Ti value in a mixture of the base agent (I) and the curing agent (II) is in a range of 3 to 6.

9. A method for forming a putty coating film using a putty coating composition comprising a base agent (I) and a curing agent (II), the method comprising an application step of mixing the base agent (I) and the curing agent (II) in a static mixer unit and applying the mixture with an airless spray,

   wherein the base agent (I) comprises an unsaturated polyester resin (A), an unsaturated monomer (B), a filler (C), a viscosity modifier (D), and an abrasive modifier (E),
   wherein tthe curing agent (II) comprises an organic peroxide (F) and a plasticizer (G),
   wherein ta viscosity of the base agent (I) at 23°C is in a range of 0.5 to 130 Pa·s,
   wherein ta viscosity of the curing agent (II) at 23°C is in a range of 5 to 20 mPa·s, and
   wherein tthe viscosity modifier (D) comprises an inorganic laminar compound.

**EP 4 245 428 A1**

# INTERNATIONAL SEARCH REPORT

| International application No. |
|---|
| **PCT/JP2021/034597** |

**A. CLASSIFICATION OF SUBJECT MATTER**

*B05D 7/24*(2006.01)i; *C09D 4/00*(2006.01)i; *C09D 5/34*(2006.01)i; *C09D 167/06*(2006.01)i; *C09D 7/43*(2018.01)i; *C09D 7/61*(2018.01)i; *C09D 7/63*(2018.01)i
FI: C09D167/06; C09D7/43; C09D7/61; C09D7/63; C09D5/34; C09D4/00; B05D7/24 301

According to International Patent Classification (IPC) or to both national classification and IPC

**B. FIELDS SEARCHED**

Minimum documentation searched (classification system followed by classification symbols)

B05D7/24; C09D4/00; C09D5/34; C09D167/06; C09D7/43; C09D7/61; C09D7/63

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 56-23664 A (DAINIPPON TORYO KK) 01 June 1981 (1981-06-01)<br>claim 1, page 2, right column, line 17 to page 4, right column, line 5, examples A-D, tables 2, 3 | 1-6, 8 |
| A | | 7, 9 |
| Y | JP 2003-306643 A (KANSAI PAINT CO LTD) 31 October 2003 (2003-10-31)<br>claims 1, 4-5, paragraphs [0017]-[0021] | 1-6, 8 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| | International application No. |
|---|---|
| | **PCT/JP2021/034597** |

| Patent document cited in search report | Publication date (day/month/year) | Patent family member(s) | Publication date (day/month/year) |
|---|---|---|---|
| JP 56-23664 A | 01 June 1981 | (Family: none) | |
| JP 2003-306643 A | 31 October 2003 | (Family: none) | |

Form PCT/ISA/210 (patent family annex) (January 2015)

**EP 4 245 428 A1**

REFERENCES CITED IN THE DESCRIPTION

**Patent documents cited in the description**

- JP 7328523 A

- JP 10080666 A